# EUROPÄISCHE PATENTANMELDUNG

(11) **EP 1 101 933 A2**
(43) Veröffentlichungstag der Anmeldung: **23.05.2001**
(21) Anmeldenummer: 00122211.6
(22) Anmeldetag: 16.10.2000
(51) Int. Cl.: F02P 17/12, G01M 15/00

(54) **Schaltung zur Zündaussetzererkennung bei einer Brennkraftmaschine**

(30) Priorität: 22.11.1999 DE 19956032
(71) Anmelder: Volkswagen Aktiengesellschaft, 38436 Wolfsburg (DE)
(72) Erfinder: Nohtse, Christoph, 38173 Veltheim/ Ohe (DE); Hoffmann, Alfredo, 38518 Gifhorn (DE)

(57) **Zusammenfassung**

Es ist bekannt, daß auf der Primärseite einer Zündspule eine Spannung gemessen wird, die Aufschluß gibt, wie lange die Brenndauer des Zündfunkens war. In Abhängigkeit von der Zündbrenndauer wird dann auf einen Zündaussetzer geschlossen. Nachteilig hierbei ist, daß während der gesamten Meßwertermittlung ein Steuergerät eine Meßwerterfassung vornimmt. Der Erfindung liegt die Aufgabe zugrunde eine Schaltung zur Zündaussetzererkennung zu schaffen.

Bei der erfindungsgemäßen Schaltung zur Zündaussetzererkennung bei einer Brennkraftmaschine mit einer Zündspule, die Primär- und Sekundärwicklungen aufweist, und einem Zündunterbrecher, ist die Schaltung dadurch gekennzeichnet, daß eine Meßeinheit den Sekundärstrom mißt. Über den Sekundärstrom ist es nun möglich, eine Zündaussetzererkennung vorzunehmen.

## Beschreibung

Die Erfindung betrifft eine Schaltung zur Zündaussetzererkennung bei einer Brennkraftmaschine.

Es ist bekannt, daß auf der Primärseite einer Zündspule eine Spannung gemessen wird, die Aufschluß gibt, wie lange die Brenndauer des Zündfunkens war. In Abhängigkeit von der Zündbrenndauer wird dann auf einen Zündaussetzer geschlossen. Nachteilig hierbei ist, daß während der gesamten Meßwertermittlung ein Steuergerät eine Meßwerterfassung vornimmt.

Der Erfindung liegt die Aufgabe zugrunde eine Schaltung zur Zündaussetzererkennung zu schaffen. Diese Aufgabe wird durch die in den Ansprüchen angegebenen Merkmale der Erfindung gelöst. Vorteilhafte Weiterbildungen der Erfindung sind in den Unteransprüchen angegeben.

Bei der erfindungsgemäßen Schaltung zur Zündaussetzererkennung bei einer Brennkraftmaschine mit einer Zündspule, die Primär- und Sekundärwicklungen aufweist, und einem Zündunterbrecher, ist die Schaltung dadurch gekennzeichnet, daß eine Meßeinheit den Sekundärstrom mißt. Über den Sekundärstrom ist es nun möglich, eine Zündaussetzererkennung vorzunehmen.

Vorteilhafterweise ist ein Widerstand in dem Pfad der Sekundärwicklung angeordnet. Die Meßeinheit wird durch eine Steuereinheit angesteuert, wobei Meß- und Steuereinheit auch kombiniert sein können.

Das Verfahren zur Zündaussetzererkennung bei einer Brennkraftmaschine zeichnet sich dadurch aus, daß zu verschiedenen Zeitpunkten der Sekundärstrom erfaßt wird und mit gespeicherten Daten ein Vergleich stattfindet.

Die Zeitpunkte können fest vorgegeben sein. Es ist jedoch auch möglich, daß in Abhängigkeit des Sekundärstromes verschiedene Zeitpunkte gewählt werden. Eine feste Vorgabe hat den Vorteil, daß die Steuereinheit neben anderen routinemäßigen Abfragen zu fest vorgegebenen Zeitpunkten eine Meßwerterfassung vornimmt. Eine Zeitpunktermittlung in Abhängigkeit des Sekundärstromes hat den Vorteil, daß die Stromerfassung auch nicht ständig erfolgen muß, jedoch eine genauere Werterfassung möglich ist und damit die Ansteuerung der Brennkraftmaschine verbessert wird.

Vorteilhafterweise wird die Meßeinheit durch die Steuereinheit angesteuert. Es ist jedoch auch möglich, daß Meß- und Steuereinheit durch ein Motorsteuergerät gebildet werden.

Durch Erfassen des Sekundärstromes zu verschiedenen Zeiten und durch einen Vergleich mit abgespeicherten Daten ist es möglich, eine Abweichung festzustellen. Aufgrund von dieser Abweichung zu den abgespeicherten Daten kann erkannt werden, ob es zu einer Zündaussetzung kam und entsprechende Gegenmaßnahmen können eingeleitet werden.

Eine Gegenmaßnahme zur Zündaussetzung wäre, daß das Kraftstoffluftgemisch entsprechend verändert oder der Sekundärstrom entsprechend erhöht bzw. abgesenkt wird. Auch wäre es möglich, daß in einem Anzeigeinstrument auf die Zündaussetzung hingewiesen wird.

Ferner können die Daten auch gespeichert werden, so daß diese für Diagnosezwecke zur Verfügung stehen

Die Erfindung wird im folgenden anhand der Zeichnung an mehreren Ausführungsbeispielen erläutert. In der Zeichnung zeigen
- Fig. 1: eine erfindungsgemäße Schaltung und
- Fig. 2: eine Sekundärstrom Kennlinie.

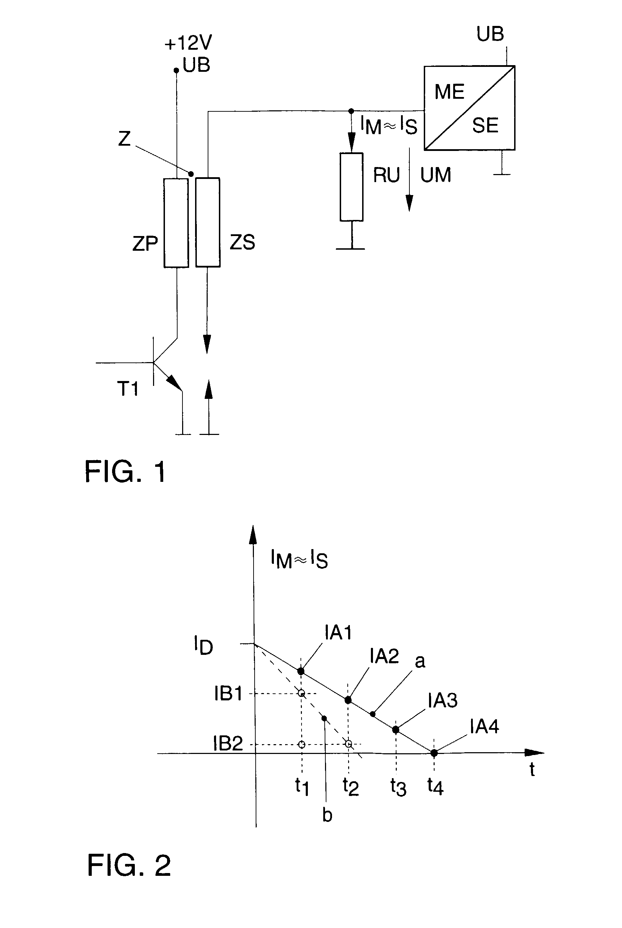

Fig. 1 zeigt eine erfindungsgemäße Schaltung. Die Betriebsspannung UB von 12 V liegt zum einen an der Meß- und/ Steuereinheit ME/SE an und zum anderen an der Primärspule ZP der Zündspule Z. Der Sekundärunterbrecher ist hier als Zündtransistor T1 ausgebildet. Im Pfad der Sekundärwicklung ZS der Zündspule Z ist ein Meßwiderstand RM angeordnet. Über den Meßwiderstand fällt die Spannung UM ab. Der Meßwiderstand hat vorzugsweise einen Wert von 100 Ω. Der Meßstrom durch den Meßwiderstand RM ist mit IM dargestellt. Die Meßeinheit ME kann nun anhand der abfallenden Spannung UM an den Meßwiderstand RM eine Spannungs-/Strommessung vornehmen.

Fig. 2 zeigt den Sekundärstrom IS, welcher proportional zum Meßstrom IM ist an in Abhängigkeit zur Zeit t. Beim Durchbruch, d. h. wenn eine Zündung erfolgt, fließt der Strom IB, welcher in der Regel eine konstante Höhe hat. Bei einer normalen Verbrennung verläuft der Stromverlauf gemäß der Linie a. Zu unterschiedlichen Zeitpunkten t1 bis t4 werden Messungen vorgenommen und die erfaßten Stromwerte mit abgespeicherten Stromdaten in der Meß-/Steuereinheit verglichen. Die Normalwerte sind mit IA1 bis IA4 dargestellt. Der Stromverlauf gemäß Linie b ist ein Stromverlauf, wenn es zu einer Zündaussetzung kam. Zu dem fest vorgegebenen Zeitpunkt t1 wird ein Strom IB1 ermittelt und das Steuergerät stellt fest, daß es sich um eine Zündaussetzung handelt. Eine Bestätigung findet bei der zweiten Messung IB2 statt. Das Steuergerät hat nun bis zum nächsten Zündvorgang Zeit, entsprechende Gegenmaßnahmen vorzunehmen, damit es anschließend wieder zu einer Zündung kommt bzw. eine Zündaussetzerkennung anhand einer Kontrolleuchte dem Fahrer mitzuteilen.

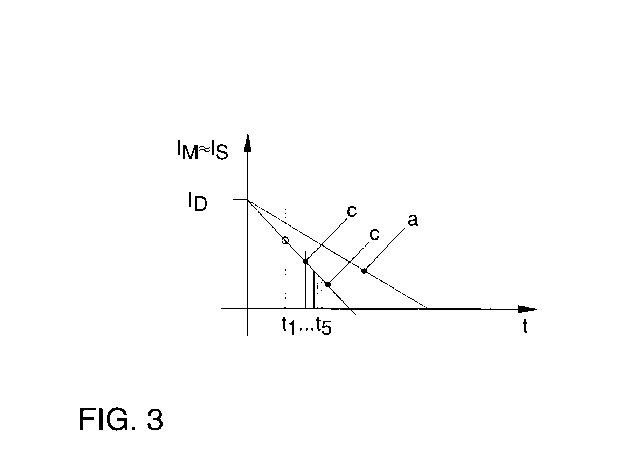

Fig. 3 zeigt ein ähnliches Verfahren, wobei dort die Meßzeitpunkte t1 bis t5 variabel gehalten werden. Sobald zum Zeitpunkt t1 festgestellt wird, daß eine Abweichung von der Normallinie a vorliegt, wird der Meßzeitpunkt verkürzt, um baldmöglichst den Verlauf der Linie c zu berechnen.

Gegenüber der bekannten Spannungsmeßung, wo ein Steuergerät die ganze Zeit mit den Messen von Meßwerten beschäftigt ist, kann bei dem erfindungsgemäßen Verfahren darauf verzichtet werden und man mißt zu vorgegebenen bzw. zu aktuell errechneten Zeitpunkten den Stromwert. Es ist selbstverständlich, daß die Zeitpunkte t1 bis t5 entsprechend feiner oder grober in ihrer Anzahl zur korrekten Meßwerterfassung aufgeteilt werden können. Bei dem Meßwertverfahren gemäß Fig. 3 ist es möglich, genauere Aussagen zu dem Stromverlauf zu machen, wenn es zu einem Zündaussetzer kam. Die Stromkennlinien b und c könnten auch überhalb der Stromkennlinie a liegen und es würde auch so ein Zündaussetzer erkannt werden. Auch wäre es möglich, eine zu lang anhaltende Zündung zu detektieren.

## Patentansprüche

1. Schaltung zur Zündaussetzererkennung bei einer Brennkraftmaschine mit einer Zündspule (Z), mit Primär (ZP) und Sekundär Wicklung (ZS) und mit einem Zündunterbrecher (T1), **dadurch gekennzeichnet, daß** eine Meßeinheit (ME) den Sekundärstrom (IS) mißt.

2. Schaltung nach Anspruch 1, **dadurch gekennzeichnet, daß** in den Pfad der Sekundär Wicklung (ZS) ein Widerstand (RM) angeordnet ist.

3. Schaltung nach Anspruch 1, **dadurch gekennzeichnet, daß** die Meßeinheit durch eine Steuereinheit (SE) ansteuerbar ist.

4. Verfahren zur Zündaussetzererkennung bei einer Brennkraftmaschine nach Anspruch 1, **dadurch gekennzeichnet, daß** zu verschiedenen Zeitpunkten (t1-t4) der Sekundärstrom (IS) erfaßt und mit gespeicherten Daten verglichen wird .

5. Verfahren nach Anspruch 4, **dadurch gekennzeichnet, daß** die verschiedenen Zeitpunkte fest vorgegeben werden.

6. Verfahren nach Anspruch 4, **dadurch gekennzeichnet, daß** die verschiedenen Zeitpunkte in Abhängigkeit des Sekundärstromes vorgegeben werden.

7. Verfahren nach Anspruch 4, **dadurch gekennzeichnet, daß** die Meßeinheit durch die Steuereinheit angesteuert wird.

8. Verfahren nach Anspruch 7, **dadurch gekennzeichnet, daß** Meßeinheit und Steuereinheit durch ein Motorsteuergerät gebildet wird.
